(19) Europäisches Patentamt
European Patent Office
Office européen des brevets

(11) EP 4 778 992 A1

(12) **EUROPEAN PATENT APPLICATION**
published in accordance with Art. 153(4) EPC

(43) Date of publication:
**22.07.2026 Bulletin 2026/30**

(21) Application number: **24877623.9**

(22) Date of filing: **10.10.2024**

(51) International Patent Classification (IPC):
***C09K 5/08*** *(2006.01)* ***C09K 21/00*** *(2006.01)*
***C08K 3/22*** *(2006.01)* ***C08J 5/18*** *(2006.01)*

(52) Cooperative Patent Classification (CPC):
**C08J 5/18; C08K 3/22; C08L 3/02; C08L 83/04; C09K 5/08; C09K 21/00; H01M 10/658**

(86) International application number:
**PCT/KR2024/096291**

(87) International publication number:
**WO 2025/080088 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.10.2023 KR 20230134190**

(71) Applicant: **LG Chem, Ltd.**
**Seoul 07336 (KR)**

(72) Inventors:
- **CHOI, Dan Bi**
  **Daejeon 34122 (KR)**
- **JEONG, Jae Hak**
  **Daejeon 34122 (KR)**
- **JUNG, Jin Mi**
  **Daejeon 34122 (KR)**

(74) Representative: **Hoffmann Eitle**
**Patent- und Rechtsanwälte PartmbB**
**Arabellastraße 30**
**81925 München (DE)**

(54) **COMPOSITION**

(57) The present specification discloses a composition and a use thereof. The composition can form a layer having excellent heat retardation characteristics and flame-retardant characteristics simultaneously. The present specification also discloses a use of the composition. For example, the composition is applied to a product formed by integrating a plurality of elements, whereby the heat generated from the elements can be processed efficiently. For example, even when the abnormal heat, explosion or ignition occurs in any one of the plurality of elements, the composition is applied to such a product, so that the effect of such heat, explosion, and/or ignition to other adjacent elements can be prevented or minimized. The composition can also stably perform such a function over a long period of time.

[Figure 2]

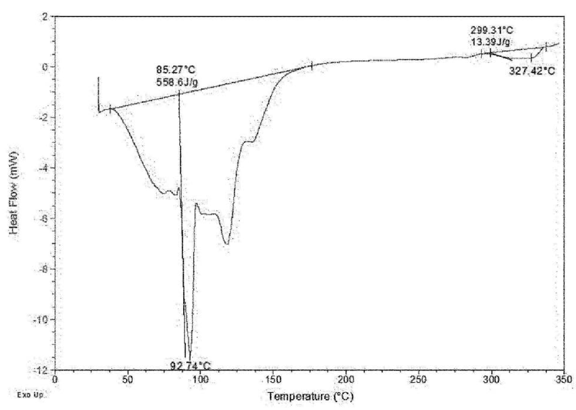


EP 4 778 992 A1

## Description

### Technical Field

This application claims the benefit of priority based on Korean Patent Application No. 10-2023-0134190 dated October 10, 2023, the disclosure of which is incorporated herein by reference in its entirety.

This specification discloses a composition and a use thereof.

### Background Art

The importance of technology for processing heat generated from products becomes bigger and bigger, but treatment, maintenance, and control of heat in products manufactured using multiple heat-generating elements (heating elements) are difficult problems.

For example, it is very important to prevent a so-called TR (Thermal Runaway) or TP (Thermal Propagation) phenomenon occurring in a battery module or a battery pack. A battery module or a battery pack comprises a plurality of battery cells or a plurality of battery modules, which are positioned relatively adjacent to each other.

In such a structure, the phenomenon in which abnormal heat generation, ignition, and/or explosion, and the like occurring in one battery cell and/or battery module is transmitted to other adjacent battery cells in a chain is called the TR or TP phenomenon. Chain ignition or chain explosion caused by such a TR or TP phenomenon must be managed in terms of stability.

## Disclosure

### Technical Problem

The present specification discloses a composition and a use thereof. The composition can form a layer having excellent heat retardation characteristics and flame-retardant characteristics simultaneously. The present specification also discloses a use of the composition. For example, the composition is applied to a product formed by integrating a plurality of elements, whereby the heat generated from the elements can be processed efficiently. For example, even when the abnormal heat, explosion or ignition occurs in any one of the plurality of elements, the composition is applied to such a product, so that the effect of such heat, explosion, and/or ignition to other adjacent elements can be prevented or minimized. The composition can also stably perform such a function over a long period of time.

### Technical Solution

Among physical properties mentioned in this specification, the physical property affected by the measurement temperature is a physical property measured at room temperature, unless otherwise specified.

The term room temperature is a natural temperature without artificially warming or cooling, which means, for example, any one temperature within a range of about 10°C to 30°C, for example, a temperature of about 20°C, about 23°C, or about 25°C or so.

The unit of temperature mentioned in this specification is °C, unless otherwise specified.

Among physical properties mentioned in this specification, the physical property affected by the pressure is a physical property measured at normal pressure, unless otherwise specified.

The term normal pressure is a natural pressure without artificially pressurizing or depressurizing, which usually refers to about 1 atm (about 700 to 800 mmHg or so) or so as the normal pressure.

Among physical properties mentioned in this specification, the physical property affected by the humidity is a physical property measured at a humidity that is not artificially adjusted under the room temperature and normal pressure condition, unless otherwise specified.

The present specification discloses a composition. The term composition means a mixture of two or more components. The composition may be a curable composition. The term curable composition means a composition that can be cured. The curing is a phenomenon in which the viscosity and/or hardness of the composition increases by a physical and/or chemical reaction between the components included in the composition.

When the composition is a curable composition, the curing method of the relevant composition is not particularly limited, and an appropriate curing method may be selected depending on the type of a resin component to be described below.

The composition may be formed to exhibit specific DSC characteristics. The DSC characteristics mean characteristics identified in a DSC analysis performed in the manner described in "3. DSC (Differential Scanning Calorimeter) analysis" of this specification.

For example, the composition or a layer or film formed of the composition may exhibit multiple endothermic peaks in the DSC analysis. The lower limit of the number of endothermic peaks identified in the DSC analysis may be 2 or so, and the upper limit thereof may be 10, 9, 8, 7, 6, 5, 4, 3, or 2 or so. The number of endothermic peaks may be within a range of more than or equal to, or more than the lower limit; or within a range of less than or equal to, or less than any upper limit arbitrarily selected from the above-listed upper limits while being more than or equal to, or more than the lower limit.

In one example, the number of endothermic peaks shown by the composition or the layer or film formed of the composition in the DSC analysis may be 2.

In calculating the number of endothermic peaks in the DSC analysis herein, the counted endothermic peaks may be peaks in which latent heat above a predetermined range is identified. In this case, the latent heat is a value obtained by integrating the endothermic peaks.

The lower limit of the latent heat of the counted endothermic peaks may be 5 J/g, 10 J/g, 15 J/g, or 20 J/g or so, and the upper limit thereof may be 2,000 J/g, 1,500 J/g, or 1,000 J/g or so. The latent heat may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

In one example, the composition, or the layer or film formed of the composition, may exhibit at least two endothermic peaks. In this case, among the two endothermic peaks, the endothermic peak identified at a lower temperature in DSC analysis may be referred to as a first endothermic peak, and the endothermic peak identified at a higher temperature may be referred to as a second endothermic peak.

In such a case, the lower limit of the ratio J1/J2 of the latent heat (integral value of the first endothermic peak) J1 by the first endothermic peak to the latent heat (integral value of the second endothermic peak) J2 by the second endothermic peak may be 0.01, 0.05, 0.1, 0.5, 1, 2, 3, 4, 5, 6, 7, 8, 9, 10, 15, 20, 25, 30, 35, 40, 45, 50, 55, or 60 or so, and the upper limit thereof may be 200, 150, 100, 95, 90, 85, 80, 75, 70, 65, 60, 55, 50, 45, 40, 35, 30, 25, 20, 15, 14, 13, 12, or 11 or so. The ratio J1/J2 may be within a range of less than or equal to, or less than any upper limit arbitrarily selected from the above-listed upper limits while being more than or equal to, or more than any lower limit arbitrarily selected from the above-listed lower limits. Under the same conditions, the lower the ratio J1/J2, the more effectively the effect to be secured through the composition, layer or film may be secured.

By causing the composition, the layer, the film, or a cured body of the composition to exhibit at least the first and second endothermic peaks in the form as above, it is possible to secure excellent heat retardation characteristics and flame-retardant characteristics.

Among the first and second endothermic peaks in the form, the first endothermic peak may appear by a phase transition material to be described below (particularly, an inorganic hydrate to be described below), and the second endothermic peak may be secured by a carbonizable organic substance to be described below. Since the phase transition material and the carbonizable organic substance do not form a eutectic phase transition material or form it substantially in a small amount, and each exhibits an independently endothermic section, the composition or the cured body thereof may exhibit a step-by-step blocking effect against flame or heat, and the transfer of heat or flame may be blocked more effectively by a carbonized layer formed from the carbonizable organic substance. For securing such characteristics, the inorganic hydrate and/or the carbonizable organic substance may be selected.

The lower limit of the latent heat exhibited by the composition, the layer or film formed of the composition, or the cured body of the composition may be 200 J/g, 250 J/g, 300 J/g, 350 J/g, 400 J/g, 450 J/g, 500 J/g, 550 J/g, 600 J/g, 650 J/g, 700 J/g, 750 J/g, 800 J/g, 850 J/g, 900 J/g, or 950 J/g or so, and the upper limit thereof may be 3,000 J/g, 2,500 J/g, 2,000 J/g, 1,500 J/g, 1,450 J/g, 1,400 J/g, 1,350 J/g, 1,300 J/g. 1,250 J/g, 1,200 J/g, 1,150 J/g, 1,100 J/g, 1,050 J/g, 1,000 J/g, 950 J/g, 900 J/g, 850 J/g, 800 J/g, 750 J/g, 700 J/g, 650 J/g, or 600 J/g or so. The latent heat may be within a range of less than or equal to, or less than any upper limit arbitrarily selected from the above-listed upper limits while being more than or equal to, or more than any lower limit arbitrarily selected from the above-listed lower limits.

The latent heat may be the sum of the respective integral values of all endothermic peaks appearing in the DSC analysis, or may be the sum of the respective integral values of the first and second endothermic peaks.

In general, the higher the latent heat value, the more advantageous it may be for achieving the effect intended in this specification. However, depending on the J1/J2 ratio, the relatively low latent heat may be advantageous for securing a more appropriate effect.

The composition, the layer or film formed of the composition, or the cured body of the composition may exhibit a latent heat section in a certain range. The latent heat section may be defined by a latent heat section start temperature and a latent heat section end temperature.

In this specification, the term latent heat section start temperature or endothermic start temperature means a temperature at an inflection point of a left onset point of the endothermic peak confirmed from the DSC analysis results.

In this specification, the term latent heat section end temperature or endothermic end temperature means a temperature at an inflection point of a right onset point of the endothermic peak confirmed from the DSC analysis results.

In this specification, the term latent heat section width is the value obtained by subtracting the latent heat section

start temperature from the latent heat section end temperature.

The lower limit of the temperature range to which the latent heat section start temperature of the composition, the layer or film formed of the composition, or the cured body of the composition belongs may be 10°C, 15°C, 20°C, 25°C, 30°C, or 35°C or so, and the upper limit thereof may be 200°C, 195°C, 190°C, 185°C, 180°C, 175°C, 170°C, 165°C, 160°C, 155°C, 150°C, 145°C, 140°C, 135°C, 130°C, 125°C, 120°C, 115°C, 110°C, 105°C, 100°C, 95°C, 90°C, 85°C, 80°C, 75°C, 70°C, 65°C, 60°C, 55°C, 50°C, 45°C, 40°C, 35°C, or 30°C or so. The temperature range to which the latent heat section start temperature belongs may be within a range of less than or equal to, or less than any upper limit arbitrarily selected from the above-listed upper limits while being more than or equal to, or more than any lower limit arbitrarily selected from the above-listed lower limits. When the composition or the like has multiple latent heat sections (i.e., when there are multiple endothermic peaks), the latent heat section start temperature means the lowest value among the latent heat section start temperatures of the multiple endothermic peaks.

The lower limit of the latent heat section end temperature of the composition, the layer or film formed of the composition, or the cured body of the composition may be 200°C, 250°C, or 300°C or so, and the upper limit thereof may be 600°C, 550°C, 500°C, 450°C, 400°C, or 350°C or so. The temperature range to which the latent heat section end temperature belongs may be within a range of less than or equal to, or less than any upper limit arbitrarily selected from the above-listed upper limits while being more than or equal to, or more than any lower limit arbitrarily selected from the above-listed lower limits. When the composition or the like has multiple latent heat sections (i.e., when there are multiple endothermic peaks), the latent heat section end temperature means the highest value among the latent heat section end temperatures of the multiple endothermic peaks.

As described above, the composition or the like may exhibit at least two or more endothermic peaks (latent heat sections) in the DSC analysis.

For example, the composition or the like may exhibit the first endothermic peak, which is defined as the first latent heat section start temperature and the first latent heat section end temperature, and the second endothermic peak, which is defined as the second latent heat section start temperature and the second latent heat section end temperature, in the DSC analysis.

The lower limit of the temperature range to which the first latent heat section start temperature belongs may be 10°C, 15°C, 20°C, 25°C, 30°C, or 35°C or so, and the upper limit thereof may be 200°C, 195°C, 190°C, 185°C, 180°C, 175°C, 170°C, 165°C, 160°C, 155°C, 150°C, 145°C, 140°C, 135°C, 130°C, 125°C, 120°C, 115°C, 110°C, 105°C, 100°C, 95°C, 90°C, 85°C, 80°C, 75°C, 70°C, 65°C, 60°C, 55°C, 50°C, 45°C, 40°C, 35°C, or 30°C or so. The temperature range to which the first latent heat section start temperature belongs may be within a range of less than or equal to, or less than any upper limit arbitrarily selected from the above-listed upper limits while being more than or equal to, or more than any lower limit arbitrarily selected from the above-listed lower limits.

The lower limit of the temperature range to which the first latent heat section end temperature of the first endothermic peak belongs may be 80°C, 85°C, 90°C, 95°C, 100°C, 110°C, 120°C, 130°C, 140°C, 150°C, 160°C, 165°C, 170°C, or 175°C or so, and the upper limit thereof may be 250°C, 240°C, 230°C, 220°C, 210°C, 200°C, 190°C, 180°C, 175°C, 170°C, 165°C, 160°C, 155°C, 150°C, 145°C, or 140°C or so. The first latent heat section end temperature may be within a range of less than or equal to, or less than any upper limit arbitrarily selected from the above-listed upper limits while being more than or equal to, or more than any lower limit arbitrarily selected from the above-listed lower limits.

The lower limit of the width of the latent heat section of the first endothermic peak (the value obtained by subtracting the first latent heat section start temperature from the first latent heat section end temperature) may be 50°C, 60°C, 70°C, 80°C, 90°C, 100°C, 110°C, 120°C, 130°C, 140°C, or 150°C or so, and the upper limit thereof may be 300°C, 290°C, 280°C, 270°C, 260°C, 250°C, 240°C, 230°C, 220°C, 210°C, 200°C, 190°C, 180°C, 170°C, 160°C, 150°C, 140°C, 130°C, 120°C, 110°C, 100°C, or 90°C or so. The width of the latent heat section of the first endothermic peak may be within a range of less than or equal to, or less than any upper limit arbitrarily selected from the above-listed upper limits while being more than or equal to, or more than any lower limit arbitrarily selected from the above-listed lower limits.

The lower limit of the latent heat indicated by the first endothermic peak may be 200 J/g, 250 J/g, 300 J/g, 350 J/g, 400 J/g, 450 J/g, 500 J/g, 550 J/g, 600 J/g, 650 J/g, 700 J/g, 750 J/g, 800 J/g, 850 J/g, 900 J/g, or 950 J/g or so, and the upper limit thereof may be 2,000 J/g, 1,500 J/g, 1,450 J/g, 1,400 J/g, 1,350 J/g, 1,300 J/g, 1,250 J/g, 1,200 J/g, 1,150 J/g, 1,100 J/g, 1,050 J/g, 1000 J/g, 950 J/g, 900 J/g, 850 J/g, 800 J/g, 750 J/g, 700 J/g, 650 J/g, 600 J/g, 550 J/g, 500 J/g, 450 J/g, or 400 J/g or so. The latent heat by the first endothermic peak may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The lower limit of the second latent heat section start temperature of the second endothermic peak may be 180°C, 190°C, 200°C, 210°C, 220°C, 230°C, 240°C, 250°C, 260°C, 270°C, 280°C, 290°C, 300°C, or 310°C or so, and the upper limit thereof may be 400°C, 350°C, 300°C, 290°C, 280°C, 270°C, or 260°C or so. The second latent heat section start temperature may be within a range of less than or equal to, or less than any upper limit arbitrarily selected from the above-listed upper limits while being more than or equal to, or more than any lower limit arbitrarily selected from the above-listed

lower limits.

The lower limit of the second latent heat section end temperature of the second endothermic peak may be 200°C, 250°C, 300°C, 310°C, 320°C, or 330°C or so, and the upper limit thereof may be 600°C, 550°C, 500°C, 450°C, 400°C, 350°C, 340°C, 330°C, or 325°C or so. The latent heat section end temperature may be within a range of less than or equal to, or less than any upper limit arbitrarily selected from the above-listed upper limits while being more than or equal to, or more than any lower limit arbitrarily selected from the above-listed lower limits.

The lower limit of the width of the latent heat section of the second endothermic peak (the value obtained by subtracting the second latent heat section start temperature from the second latent heat section end temperature) may be 5°C, 10°C, 15°C, 20°C, 25°C, 30°C, 35°C, 40°C, 45°C, or 50°C or so, and the upper limit thereof may be 100°C, 90°C, 85°C, 80°C, 75°C, 70°C, 65°C, 60°C, 55°C, 50°C, 45°C, 40°C, 35°C, 30°C, or 25°C or so. The width of the latent heat section of the second endothermic peak may be within a range of less than or equal to, or less than any upper limit arbitrarily selected from the above-listed upper limits while being more than or equal to, or more than any lower limit arbitrarily selected from the above-listed lower limits.

The lower limit of the latent heat indicated by the second endothermic peak may be 1 J/g, 5 J/g, 10 J/g, 15 J/g, or 20 J/g or so, and its upper limit thereof may be 150 J/g, 100 J/g, 80 J/g, 60 J/g, 40 J/g, 30 J/g, or 20 J/g or so. The latent heat by the second endothermic peak may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

In such first and second endothermic peaks, the lower limit of the value obtained by subtracting the latent heat section end temperature of the first endothermic peak from the latent heat section start temperature of the second endothermic peak may be 30°C, 40°C, 50°C, 60°C, 70°C, 80°C, 90°C, 95°C, 100°C, 120°C, 140°C, 160°C, 170°C, 180°C, 200°C, 220°C, 240°C, or 260°C or so, and the upper limit thereof may be 600°C, 580°C, 560°C, 540°C, 520°C, 500°C, 480°C, 460°C, 440°C, 420°C, 400°C, 380°C, 360°C, 340°C, 320°C, 300°C, 280°C, 260°C, 240°C, 220°C, 200°C, 180°C, 160°C, 150°C, 140°C, 130°C, 120°C, or 110°C or so. The value obtained by subtracting the latent heat section end temperature of the first endothermic peak from the latent heat section start temperature of the second endothermic peak may be within a range of less than or equal to, or less than any upper limit arbitrarily selected from the above-listed upper limits while being more than or equal to, or more than any lower limit arbitrarily selected from the above-listed lower limits.

The lower limit of the sum of the latent heat by the first endothermic peak and the latent heat by the second endothermic peak may be 200 J/g, 250 J/g, 300 J/g, 350 J/g, 400 J/g, 450 J/g, 500 J/g, 550 J/g, 600 J/g, 650 J/g, 700 J/g, 750 J/g, 800 J/g, 850 J/g, 900 J/g, 950 J/g, 1,000 J/g, 1,500 J/g, 1,600 J/g, 1,700 J/g, 1,800 J/g, or 1,900 J/g or so, and the upper limit thereof may be 4,000 J/g, 3,500 J/g, 3,000 J/g, 2,500 J/g, 2,000 J/g, 1,500 J/g, 1,450 J/g, 1,400 J/g, 1,350 J/g, 1,300 J/g, 1,250 J/g, 1,200 J/g, 1,150 J/g, 1,100 J/g, 1,050 J/g, 1,000 J/g, 950 J/g, 900 J/g, 850 J/g, 800 J/g, 750 J/g, 700 J/g, 650 J/g, or 600 J/g or so. The sum of the latent heat by the first endothermic peak and the latent heat by the second endothermic peak may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

In one example, the lower limit of the ratio W1/W2 of the latent heat section width (the value obtained by subtracting the first latent heat section start temperature from the first latent heat section end temperature) W1 of the first endothermic peak to the latent heat section width (the value obtained by subtracting the second latent heat section start temperature from the second latent heat section end temperature) W2 of the second endothermic peak may be 1.5, 1.7, 1.9, 2, 2.2, 2.4, 2.6, 2.8, 3, 3.2, 3.4, 3.6, 3.8, 4, 4.2, 4.4, 4.6, 4.8, or 5 or so, and the upper limit thereof may be 10, 9.5, 9, 8.5, 8, 7.5, 7, 6.5, 6, 5.5, 5, 4.5, 4, 3.5, or 3 or so. The ratio may be within a range of less than or equal to, or less than any upper limit arbitrarily selected from the above-listed upper limits while being more than or equal to, or more than any lower limit arbitrarily selected from the above-listed lower limits.

The composition or the like exhibiting at least these two endothermic peaks may be applied to, for example, various products, thereby allowing the relevant products to operate in a stable and uniform temperature range, and when problems such as abnormal heat generation or explosion occur in the products, it may prevent the heat generation and explosion from being serially expanded.

To secure this effect, the composition or the like may be formed so that no other endothermic peak is observed between at least the two endothermic peaks, that is, the first and second endothermic peaks.

The composition may comprise a resin component. In this specification, the category of the term resin component includes a relatively low molecular weight component capable of forming the resin component through curing or polymerization reaction, and the like, as well as a case where it is a resin component itself. Therefore, the resin component may be a monomolecular, oligomeric, or polymeric compound.

The resin component may have a molecular weight in an appropriate level. For example, the lower limit of the weight average molecular weight (Mw) of the resin component may be 500 g/mol, 1,000 g/mol, 5,000 g/mol, 10,000 g/mol,

11,000 g/mol, 12,000 g/mol, 13,000 g/mol, 14,000 g/mol, or 15,000 g/mol or so, and the upper limit thereof may also be 100,000 g/mol, 90,000 g/mol, 80,000 g/mol, 70,000 g/mol, 60,000 g/mol, 50,000 g/mol, 40,000 g/mol, 30,000 g/mol, or 20,000 g/mol or so. The weight average molecular weight may be within a range of less than or equal to, or less than any upper limit arbitrarily selected from the above-listed upper limits while being more than or equal to, or more than any lower limit arbitrarily selected from the above-listed lower limits.

The molecular weight may be identified by the GPC analysis performed in the manner described in "4. GPC (Gel Permeation Chromatograph)" of this specification.

There is no special limitation on the type of the resin component. In one example, the resin component may include a polyurethane component, a silicone resin component, an acrylic resin component, or an epoxy resin component. The polyurethane component, silicone resin component, acrylic resin component or epoxy resin component may be polyurethane, silicone resin, acrylic resin, or epoxy resin, or may be a component forming the polyurethane, silicone resin, acrylic resin, or epoxy resin through the curing or polymerization reaction. There is no special limitation on specific types of the applicable curable resin component, and known polyurethane components, silicone resin components, acrylic resin components, or epoxy resin components, and the like may be used.

For example, when the curable resin component is a silicone resin component, the component is an addition-curable silicone resin component, which may include (1) a polyorganosiloxane containing two or more alkenyl groups in the molecule, and (2) a polyorganosiloxane containing two or more silicon-bonded hydrogen atoms in the molecule. The compound may form a cured-product by addition reaction in the presence of a catalyst such as a platinum catalyst.

The (1) polyorganosiloxane contains at least two alkenyl groups. In this instance, a specific example of the alkenyl group includes a vinyl group, an allyl group, a butenyl group, a pentenyl group, a hexenyl group or a heptenyl group, and the like, and a vinyl group of the foregoing is usually applied, but is not limited thereto. In the (1) polyorganosiloxane, the bonding position of the above-described alkenyl group is not particularly limited. For example, the alkenyl group may be bonded to the end of the molecular chain and/or to the side chain of the molecular chain. In addition, in the (1) polyorganosiloxane, the type of the substituent that may be included in addition to the above-described alkenyl group may include an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; and a halogen-substituted alkyl group such as a chloromethyl group, a 3-chloropropyl group, or a 3,3,3-trifluoropropyl group, and the like, and a methyl group or a phenyl group of the foregoing is usually applied, but is not limited thereto.

The molecular structure of the (1) polyorganosiloxane is not particularly limited, which may also have, for example, any shape, such as a linear, branched, cyclic, network, or partially branched linear structure. In general, one having a linear molecular structure of such molecular structures is usually applied, but is not limited thereto.

A more specific example of the polyorganosiloxane (1) may include a dimethylsiloxane-methylvinylsiloxane copolymer blocked with trimethylsiloxane groups at both ends of the molecular chain, methylvinylpolysiloxane blocked with trimethylsiloxane groups at both ends of the molecular chain, a dimethylsiloxane-methylvinylsiloxane-methylphenylsiloxane copolymer blocked with trimethylsiloxane groups at both ends of the molecular chain, dimethylpolysiloxane blocked with dimethylvinylsiloxane groups at both ends of the molecular chain, methylvinylpolysiloxane blocked with dimethylvinylsiloxane groups at both ends of the molecular chain, a dimethylsiloxane-methylvinylsiloxane copolymer blocked with dimethylvinylsiloxane groups at both ends of the molecular chain, a dimethylsiloxane-methylvinylsiloxane-methylphenylsiloxane copolymer blocked with dimethylvinylsiloxane groups at both ends of the molecular chain, a polyorganosiloxane copolymer comprising a siloxane unit represented by $R^1{}_2SiO_{2/2}$ and a siloxane unit represented by $R^1{}_2R^2SiO_{1/2}$ and a siloxane unit represented by $SiO_{4/2}$, a polyorganosiloxane copolymer comprising a siloxane unit represented by $R^1{}_2R^2SiO_{1/2}$ and a siloxane unit represented by $SiO_{4/2}$, a polyorganosiloxane copolymer comprising a siloxane unit represented by $R^1R^2SiO_{2/2}$ and a siloxane unit represented by $R^1SiO_{3/2}$ or a siloxane unit represented by $R^2SiO_{3/2}$, and a mixture of two or more of the foregoing, but is not limited thereto. Here, $R^1$ is a hydrocarbon group other than the alkenyl group, which may be, specifically, an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like. In addition, here, $R^2$ is an alkenyl group, which may be, specifically, a vinyl group, an allyl group, a butenyl group, a pentenyl group, a hexenyl group, or a heptenyl group, and the like.

In the addition-curable silicone composition, (2) polyorganosiloxane may serve to crosslink the (1) polyorganosiloxane. In the (2) polyorganosiloxane, the bonding position of the hydrogen atom is not particularly limited, and for example, it may be bonded to the terminal and/or side chain of the molecular chain. In addition, in the (2) polyorganosiloxane, the type of the substituent that may be included other than the silicon-bonded hydrogen atoms is not particularly limited, which may include, for example, an alkyl group, an aryl group, an aralkyl group or a halogen-substituted alkyl group, and the like, as mentioned in (1) polyorganosiloxane, and a methyl group or a phenyl group of the foregoing is usually applied, but is not limited thereto.

The molecular structure of the (2) polyorganosiloxane is not particularly limited, which may also have, for example, any shape, such as a linear, branched, cyclic, network, or partially branched linear structure. In general, one having a linear molecular structure of such molecular structures is usually applied, but is not limited thereto.

A more specific example of the (2) polyorganosiloxane may include methylhydrogenpolysiloxane blocked with trimethylsiloxane groups at both ends of the molecular chain, a dimethylsiloxane-methylhydrogen copolymer blocked with trimethylsiloxane groups at both ends of the molecular chain, a dimethylsiloxane-methylhydrogensiloxane-methylphenylsiloxane copolymer blocked with trimethylsiloxane groups at both ends of the molecular chain, dimethylpolysiloxane blocked with dimethylhydrogensiloxane groups at both ends of the molecular chain, a dimethylsiloxane-methylphenylsiloxane copolymer blocked with dimethylhydrogensiloxane groups at both ends of the molecular chain, methylphenylpolysiloxane blocked with dimethylhydrogensiloxane groups at both ends of the molecular chain, a polyorganosiloxane copolymer comprising a siloxane unit represented by $R^1{}_3SiO_{1/2}$, a siloxane unit represented by $R^1{}_2HSiO_{1/2}$ and a siloxane unit represented by $SiO_{4/2}$, a polyorganosiloxane copolymer comprising a siloxane unit represented by $R^1{}_2HSiO_{1/2}$ and a siloxane unit represented by $SiO_{4/2}$, a polyorganosiloxane copolymer comprising a siloxane unit represented by $R^1HSiO_{2/2}$ and a siloxane unit represented by $R^1SiO_{3/2}$ or a siloxane unit represented by $HSiO_{3/2}$ and a mixture of two or more of the foregoing, but is not limited thereto. Here, $R^1$ is a hydrocarbon group other than the alkenyl group, which may be, specifically, an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like.

The content of the (2) polyorganosiloxane is not particularly limited as long as it is included to the extent that appropriate curing can be achieved. For example, the (2) polyorganosiloxane may be included in an amount such that 0.5 to 10 silicon-bonded hydrogen atoms are present with respect to one alkenyl group included in the aforementioned (1) polyorganosiloxane. In this range, the curing can sufficiently proceed and the heat resistance can be ensured.

The addition-curable silicone resin component may further comprise platinum or a platinum compound as the catalyst for curing. A specific type of such platinum or platinum compound is not particularly limited. The ratio of the catalyst may also be adjusted to a level at which proper curing can be achieved.

In another example, the silicone resin component is a condensation-curable silicone resin component, which may comprise, for example, (a) an alkoxy group-containing siloxane polymer; and (b) a hydroxyl group-containing siloxane polymer.

The (a) siloxane polymer may be, for example, a compound represented by the following formula A.

[Formula A] $R^1{}_aR^2{}_bSiO_c(OR^3)_d$

In Formula A, $R^1$ and $R^2$ each independently represent a hydrogen atom or a substituted or unsubstituted monovalent hydrocarbon group, $R^3$ represents an alkyl group, where if pluralities of $R^1$, $R^2$ and $R^3$ are each present, they may be the same or different from each other, and a and b, each independently represent a number of 0 or more and less than 1, a+b represents a number of more than 0 and less than 2, c represents a number of more than 0 and less than 2, d represents a number of more than 0 and less than 4, and $a+b+c\times2+d$ is 4.

In the definition of Formula A, the monovalent hydrocarbon may be, for example, an alkyl group with 1 to 8 carbon atoms, a phenyl group, a benzyl group, or a tolyl group, and the like, where the alkyl group with 1 to 8 carbon atoms may be a methyl group, an ethyl group, a propyl group, an isopropyl group, a butyl group, a pentyl group, a hexyl group, a heptyl group or an octyl group, and the like. In addition, in the definition of Formula A, the monovalent hydrocarbon group may be substituted with, for example, a known substituent such as halogen, an amino group, a mercapto group, an isocyanate group, a glycidyl group, a glycidoxy group, or a ureido group.

In the definition of Formula A, an example of the alkyl group in $R^3$ may include a methyl group, an ethyl group, a propyl group, an isopropyl group, or a butyl group, and the like. Among the alkyl groups, a methyl group or an ethyl group, and the like is usually applied, without being limited thereto.

Among the polymers of Formula A, branched or tertiarily crosslinked siloxane polymers may be used. In addition, in this (a) siloxane polymer, the hydroxyl groups may remain within the range without impairing the purpose, specifically, within the range without inhibiting a dealcoholization reaction.

The (a) siloxane polymer can be produced, for example, by hydrolyzing and condensing polyfunctional alkoxysilane or polyfunctional chlorosilane, and the like. An average person skilled in the art can easily select an appropriate polyfunctional alkoxysilane or chlorosilane according to the desired (a) siloxane polymer, and can also easily control the conditions of the hydrolysis and condensation reaction using the same. Meanwhile, at the time of producing the (a) siloxane polymer, according to the purpose, an appropriate monofunctional alkoxysilane may also be used in combination.

As the (b) hydroxyl group-containing siloxane polymer included in the condensation-curable silicone composition, for example, a compound represented by the following formula B may be used.

[Formula B]

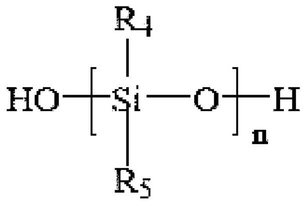

In Formula B, $R_4$ and $R_5$ each independently represent a hydrogen atom or a substituted or unsubstituted monovalent hydrocarbon group, where if pluralities of $R_4$ and $R_5$ are each present, they may be the same or different from each other, and n represents an integer of 5 to 2,000.

In the definition of Formula B, a specific type of the monovalent hydrocarbon group may include, for example, the same hydrocarbon group as in the case of Formula A.

The (b) siloxane polymer can be produced, for example, by hydrolyzing and condensing dialkoxysilane and/or dichlorosilane. An average person skilled in the art can easily select an appropriate dialkoxy silane or dichlorosilane according to the desired (b) siloxane polymer, and can also easily control the conditions of the hydrolysis and condensation reaction using the same.

The above-described addition curing type or condensation curing type silicone composition is one example of the applicable silicone resin component.

In another example, if the curable resin component is a polyurethane component, the component may comprise at least a polyol and a polyisocyanate. Here, the polyol is a compound containing at least two hydroxyl groups, and the polyisocyanate is a compound containing at least two isocyanate groups. These compounds may each be a monomolecular, oligomeric, or polymeric compound.

There is no great limitation on the type of the applicable polyol, and for example, a known polyether polyol or polyester polyol may be applied. Here, as the polyether polyol, polyalkylene glycol, in which the alkylene glycol moiety has 1 to 20, 1 to 16, 1 to 12, 1 to 8, or 1 to 4 carbon atoms, such as polypropylene glycol or polyethylene glycol, or ethylene oxide/propylene oxide copolymer-based polyol, PTME (poly(tetramethylene glycol)), PHMG (poly(hexamethylene ether glycol)), and the like are known. Also, as the polyester polyol, a polyol synthesized from dibasic acid and glycol, such as polyester polyol or polycaprolactone polyol (obtained from ring-opening polymerization of cyclic lactone) containing the dibasic acid unit and glycol unit, and the like are known. Furthermore, in addition to such polyols, hydrocarbon-based polyols such as carbonate-based polyols, vegetable polyol castor oil, HTPB (hydroxyl-terminated polybutadiene), or HTPIB (hydroxyl-terminated polyisobutylene) are also known.

An appropriate kind may be selected and used among the known polyols as above.

As the polyisocyanate, an appropriate kind may be selected and used among known aromatic or aliphatic polyisocyanate compounds.

The composition may include a so-called phase change material (PCM) to secure the above-mentioned DSC characteristics. The phase transition material is a material that is endothermic or exothermic in a phase transition process, as is known. The phase transition material may be selected so that it may exhibit the above-described first endothermic peak.

As the phase change material, an inorganic substance, an organic substance, or a eutectic material is known. In the present specification, an inorganic phase transition material may be used as the material having the above-described latent heat characteristics.

As the inorganic phase transition material, a phase transition material of hydrate series is typically known.

Therefore, an inorganic hydrate may be used as the phase transition material. For example, the inorganic hydrate represented by the following formula 1 may be used.

[Formula 1] $M_xA_y \cdot nH_2O$

In Formula 1, M is a metal cation, A is an anion, and x, y, and n are each an arbitrary number.

Formula 1 represents a hydrate of a metal salt.

In Formula 1, M is a metal cation, and in one example, it may be a cation of a metal belonging to Group 1 to Group 12 of the periodic table. For example, the M may be a cation of a metal belonging to Group 1 or Group 2 of the periodic table.

The M may be a metal belonging to Period 2 to Period 6 of the periodic table while belonging to Groups of the periodic table. For example, the M may be a cation of a metal belonging to Period 2 to Period 6, Period 3 to Period 6, Period 4 to Period 6, Period 5 to Period 6, or Period 6 of the periodic table while belonging to Groups of the periodic table.

An example of the metal may be one or more selected from the group consisting of Li, K, Mn, Ca, Na, Zn, Fe, Ba, Mg, and Sr, but is not limited thereto.

In Formula 1, A is an anion, and there is no special limitation on the specific type thereof. For example, the A may be one or more selected from the group consisting of halogen anions (e.g., $F^-$, $Cl^-$, and/or $Br^-$, etc.), $ClO_3^-$, $OH^-$, $HPO_4^{2-}$, $NO_3^-$, $SO_4^{2-}$, $S_2O_3^{2-}$, and $CH_3O^{2-}$, but is not limited thereto.

In Formula 1, x and y are numbers determined according to the types of the metal cation and anion.

For example, x and y may be numbers satisfying the equation $p \times x = q \times y$. Here, p is the oxidation number (charge number) of the metal cation. For example, when two or more metal ions are used as the M, the sum of the products of the oxidation numbers (charge numbers) of the respective metal ions and the mole numbers of the relevant metal ions becomes the p. Here, q is the oxidation number (charge number) of the anion. For example, when two or more anions are used as the A, the sum of the products of the oxidation numbers (charge numbers) of the respective anions and the mole numbers of the relevant anions becomes the q.

In Formula 1, x and y are not particularly limited if they are selected to satisfy the relationship. In one example, the x is a number within a range of 1 to 3, which may be, for example, 1, 2, or 3, and the y is a number within a range of 1 to 3, which may be, for example, 1, 2, or 3.

In Formula 1, n is a mole number of water molecules (crystallization water) present in the hydrate, the lower limit of which may be 2, 3, 4, 5, 6, 7, or 8 or so, and the upper limit of which may be 20, 19, 18, 17, 16, 15, 14, 13, 12, 11, 10, 9, or 8 or so. The n may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

For example, an appropriate type of phase transition material capable of achieving the above-described first endothermic peak while belonging to the category of Formula 1 above may be applied.

For example, as the phase transition material, a material may be selected, which may have a latent heat section start temperature within the range of the above-described first latent heat section start temperature, have a latent heat section end temperature within the range of the first latent heat section end temperature, and exhibit a latent heat section of the first endothermic peak while belonging to the category of Formula 1 above.

The lower limit of the content of the phase transition material in the composition may be 10 wt%, 15 wt%, 20 wt%, 25 wt%, 30 wt%, 35 wt%, 40 wt%, 45 wt%, 50 wt%, or 55 wt% or so, and the upper limit thereof may be 95 wt%, 90 wt%, 85 wt%, 80 wt%, 75 wt%, 70 wt%, 65 wt%, 60 wt%, 55 wt%, 50 wt%, 45 wt%, 40 wt%, 35 wt%, 30 wt%, or 25 wt% or so. The content may be within a range of less than or equal to, or less than any upper limit arbitrarily selected from the above-listed upper limits while being more than or equal to, or more than any lower limit arbitrarily selected from the above-listed lower limits. The content of the phase transition material is a content based on the total weight of the solid content of the composition, and thus, when the composition includes a solvent, it is a content based on the total weight of the composition excluding the solvent. Under the content of the phase transition material, it is possible to secure appropriate heat retardation characteristics and flame-retardant characteristics.

In the composition, the lower limit of the weight ratio of the resin component based on 100 parts by weight of the phase transition material may be 10 parts by weight, 50 parts by weight, 55 parts by weight, 60 parts by weight, 65 parts by weight, 70 parts by weight, 75 parts by weight, 90 parts by weight, 95 parts by weight, 100 parts by weight, 110 parts by weight, 120 parts by weight, 130 parts by weight, 140 parts by weight, or 150 parts by weight or so, and the upper limit thereof may be 200 parts by weight, 190 parts by weight, 180 parts by weight, 170 parts by weight, 160 parts by weight, 150 parts by weight, 140 parts by weight, 130 parts by weight, 120 parts by weight, 110 parts by weight, 100 parts by weight, 90 parts by weight, 80 parts by weight, 70 parts by weight, or 60 parts by weight or so. The content may be within a range of less than or equal to, or less than any upper limit arbitrarily selected from the above-listed upper limits while being more than or equal to, or more than any lower limit arbitrarily selected from the above-listed lower limits.

The composition may comprise a carbonizable organic substance together with the component. The term carbonizable organic substance means an organic compound capable of forming a carbonized layer through carbonization when it has been exposed to high temperature and/or flame. This carbonizable organic substance enables heat retardation characteristics to be secured by forming a carbide when the composition or its cured body has been exposed to high temperature or flame. In addition, the carbonizable organic substance may also play a role in adjusting the viscosity or rheological characteristics of the composition or its cured body so that the phase transition material does not leak to the outside during the phase transition process.

As the carbonizable organic substance, any suitable type may be applied without special limitation if it is a material forming a carbide when it has been exposed to heat or flame.

An example of such an organic substance may be exemplified by sugars such as sorbitol or mannitol, polysaccharides such as starch or dextrin (e.g., MC (maleated cyclodexdrin) or metal salts of the MC), polyhydric alcohols such as pentaerythritol, dipentaerythritol, tripentaerythritol or THEIC (tris(hydroxyethyl)isocyanurate), celluloses, BSPPO (bi(4-methoxy-1-phospha-2,6,7-trioxabicyclo[2.2.2]-octan-1-sulfide)phenyl phosphate), lignin (alkali lignin or urea modified lignin), melamine compounds such as methylol melamine, phenol-formaldehyde resins and/or carbonizable polymer (char forming polymer) such as PA6T (poly-hexa methylene terephthalamide), and the like, but is not limited thereto.

A substance representatively applicable as the carbonizable organic substance is starch. The starch is relatively easy to obtain, which may form the appropriate carbide when exposed to heat or flame.

The lower limit of the content of the carbonizable organic substance relative to 100 parts by weight of the phase transition material may be 1 part by weight, 5 parts by weight, 10 parts by weight, 15 parts by weight, 20 parts by weight, 25 parts by weight, 45 parts by weight, 50 parts by weight, 75 parts by weight, 90 parts by weight, 95 parts by weight, 100 parts by weight, 120 parts by weight, 140 parts by weight, 160 parts by weight, 180 parts by weight, or 200 parts by weight or so, and the upper limit thereof may be 400 parts by weight, 390 parts by weight, 380 parts by weight, 370 parts by weight, 360 parts by weight, 350 parts by weight, 340 parts by weight, 330 parts by weight, 320 parts by weight, 310 parts by weight, 300 parts by weight, 290 parts by weight, 280 parts by weight, 270 parts by weight, 260 parts by weight, 250 parts by weight, 240 parts by weight, 230 parts by weight, 220 parts by weight, 210 parts by weight, 200 parts by weight, 150 parts by weight, 110 parts by weight, 100 parts by weight, 90 parts by weight, 80 parts by weight, 70 parts by weight, 60 parts by weight, 50 parts by weight, 40 parts by weight, 30 parts by weight, or 20 parts by weight or so. The content may be less than or equal to, or less than any lower limit arbitrarily selected from the above-listed upper limits, or may be more than or equal to, or more than any lower limit arbitrarily selected from the above-listed lower limits, or more than any lower limit arbitrarily selected from the above-listed lower limits, or may be within a range of less than or equal to, or less than any upper limit arbitrarily selected from the above-listed upper limits while being more than or equal to, or more than any lower limit arbitrarily selected from the above-listed lower limits.

The composition may comprise the respective components as described above, and may also optionally comprise additional known components if necessary.

The present specification also discloses a layer, sheet or film comprising the composition or a cured product thereof. Such a layer, sheet, or film may be obtained, for example, by forming a layer, sheet, or film using the composition in a known manner, and, if necessary, performing a drying, annealing and/or curing process on the formed layer, sheet, or film.

The lower limit of the content of the composition or its cured body in the layer, sheet or film may be 70 wt%, 75 wt%, 80 wt%, 85 wt%, 90 wt%, or 95 wt% or so, and the upper limit thereof may be 100 wt% or so. The content may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The film, layer, or sheet may exhibit excellent flame-retardant characteristics. For example, the layer, sheet, or film may exhibit a flame retardancy rating of V0 or V1 in a UL 94 V test (Vertical Burning Test). The UL 94 V test may be performed according to the contents described in the "2. Flame Retardancy Evaluation" section of this specification.

The film, layer or sheet may also exhibit excellent heat retardation characteristics.

For example, the layer, sheet, or film may have an absolute value of ΔT1 of the following equation 1 within a predetermined range.

[Equation 1]

$$\Delta T1 = T_I - T_L$$

In Equation 1, $T_L$ is a temperature, in a state where insulating layers having each thickness of about 0.3 mm or so are laminated on both sides of the layer, sheet, or film having a thickness of about 1.4 mm, confirmed on the surface of the other insulating layer when heat at 550°C has been applied on the surface of any insulating layer of the insulating layers laminated on both sides for 10 minutes to the surface of the other insulating layer (a temperature confirmed on the surface opposite to the surface to which heat at 550°C is applied), and $T_I$ is a temperature confirmed on the opposite surface of the insulating layer when heat at 550°C has been applied for 10 minutes to one side of the insulating layer having a thickness of about 2 mm.

Here, a ceramic sheet or an aerogel sheet may be used as the insulating layer, and the specific type thereof is not particularly limited if the same type is used upon confirming the temperatures $T_L$ and $T_I$.

The upper limit of the absolute value of ΔT1 in Equation 1 above may be 100°C, 95°C, 90°C, 85°C, 80°C, 75°C, 70°C, 65°C, 60°C, 55°C, 50°C, 45°C, 40°C, 35°C, 30°C, 25°C, 20°C, 15°C, or 12°C or so, and the lower limit thereof may be 0.1°C, 1°C, 1.5°C, 2°C, 5°C, 10°C, 15°C, 20°C, 25°C, 30°C, 35°C, 40°C, 45°C, or 50°C or so. The absolute value of ΔT1 above may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The ΔT1 may be confirmed according to the evaluation method of "1. Temperature control performance (conduction test)" of the example sections to be described below.

The ΔT1 may be a positive number or a negative number. In an appropriate example, the above ΔT1 may be a positive number.

The layer, sheet, or film may have ΔT2 of the following equation 2 within a predetermined range.

[Equation 2]

$$\Delta T2 = T_{L2} - T_{I2}$$

In Equation 2, $T_{L2}$ is a time (unit: seconds), in a state where insulating layers having each thickness of about 0.3 mm or so are laminated on both sides of the layer, sheet, or film having a thickness of about 1.4 mm, from the time point when heat at 550°C begins to be applied for 10 minutes to the surface of any insulating layer of the insulating layers laminated on both sides to the time point when the temperature confirmed on the surface of the other insulating layer of the laminate becomes 100°C, and $T_{I2}$ is a time (unit: seconds) from the time point when heat at 550°C begins to be applied for 10 minutes to one side of the insulating layer having a thickness of about 2 mm to the time point when the temperature confirmed on the other surface of the insulating layer becomes 100°C.

Here, a ceramic sheet or an aerogel sheet may be used as the insulating layer, and the specific type thereof is not particularly limited if the same type is used upon confirming the times $T_{L2}$ and $T_{I2}$.

The upper limit of ΔT2 in Equation 2 above may be 1,000 seconds, 950 seconds, 900 seconds, 850 seconds, 800 seconds, 750 seconds, 700 seconds, 650 seconds, 600 seconds, 550 seconds, 500 seconds, 450 seconds, 400 seconds, 350 seconds, 300 seconds, 250 seconds, 200 seconds, 150 seconds, 100 seconds, or 95 seconds or so, and its lower limit thereof may be 2 seconds, 5 seconds, 10 seconds, 15 seconds, 20 seconds, 25 seconds, 30 seconds, 35 seconds, 40 seconds, 45 seconds, 50 seconds, 55 seconds, 60 seconds, 65 seconds, 70 seconds, 75 seconds, 80 seconds, 85 seconds, 90 seconds, 95 seconds, 100 seconds, 105 seconds, 110 seconds, 115 seconds, 120 seconds, 125 seconds, 130 seconds, 135 seconds, 140 seconds, 145 seconds, 150 seconds, or 155 seconds or so. The ΔT2 may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The ΔT2 may be confirmed according to the evaluation method of "1. Temperature control performance (conduction test)" of the example sections to be described below.

Such a layer, sheet, or film may have an appropriate level of thickness. For example, the lower limit of the thickness may be 0.5 mm, or 1.0 mm or so, and the upper limit thereof may be 5 mm, 4.5 mm, 4 mm, 3.5 mm, 3 mm, 2.5 mm, or 2 mm or so. The thickness may be within a range of less than or equal to, or less than any upper limit arbitrarily selected from the above-listed upper limits while being more than or equal to, or more than any lower limit arbitrarily selected from the above-listed lower limits.

The present specification also discloses a laminate comprising the layer, sheet, or film. Such a laminate may comprise, for example, the layer, sheet, or film, and another functional layer formed on one or both sides of the layer, sheet, or film. In this instance, an example of the applicable functional layer is not particularly limited. For example, the functional layer may be a so-called insulating layer, flame-retardant layer, or heat-conducting layer. The specific type of the applicable functional layer is not particularly limited. For example, materials such as ceramic sheets, aerogel sheets, or metal sheets may be used as the layer.

The present specification also discloses a product comprising the composition, the cured body thereof, the layer, sheet, or film, or the laminate (hereinafter, may be referred to as the composition or the like). For example, the product may comprise a heat-generating component and the composition or the like, which exists adjacent to the heat-generating component.

The composition or the like may be usefully applied as a material for controlling heat of a heat-generating component, a heat-generating element, or a heat-generating product. Therefore, the product may comprise a heat-generating component, a heat-generating element, or a heat-generating product. The term heat-generating component, element, or product means a component, element, or product that generates heat during use, and its type is not particularly limited. Representative heat-generating components, elements, or products include various electrical/electronic products comprising battery cells, battery modules, or battery packs, and the like.

The product may comprise, for example, the heat-generating component, element, or product, and the composition or the like, which exists adjacent to the heat-generating component, element, or product. That is, the composition or the like is disposed adjacent to a heat-generating component, element, or product, whereby it can maintain a driving temperature of the product at a stable level, and when an abnormally high temperature or explosion has occurred in the heat-generating component, element, or product, and the like, it can effectively suppress a phenomenon that the high temperature and/or explosion is serially expanded.

The specific method of configuring the product is not particularly limited, and if the composition or the like is applied, the product may be configured in various known ways. In one example, the composition or the like may be positioned between battery cells and battery cells, between battery modules and battery modules, and/or between battery packs and battery packs upon configuring battery modules or battery packs.

## Advantageous Effects

The present specification discloses a composition and a use thereof. The composition can form a layer having excellent heat retardation characteristics and flame-retardant characteristics simultaneously. The present specification also discloses a use of the composition. For example, the composition is applied to a product formed by integrating a plurality of elements, whereby the heat generated from the elements can be processed efficiently. For example, even when the abnormal heat, explosion or ignition occurs in any one of the plurality of elements, the composition is applied to such a product, so that the effect of such heat, explosion, and/or ignition to other adjacent elements can be prevented or minimized. The composition can also stably perform such a function over a long period of time.

## Description of Drawings

Figure 1 is a DSC analysis result of a composition of Example 1.
Figure 2 is a DSC analysis result of a composition of Example 2.
Figure 3 is a DSC analysis result of a composition of Example 3.
Figure 4 is a DSC analysis result of a composition of Example 4.
Figure 5 is a DSC analysis result of a composition of Example 5.

## Mode for Invention

Hereinafter, the composition or the like is specifically described through examples and comparative examples, but the scope of the composition or the like is not limited by the following examples.

### 1. Temperature control performance (conduction test)

Cooling films manufactured in Examples or Comparative Examples are each cut in the form of a film having a thickness of about 1.4 mm, and horizontal and vertical lengths of 40 mm each. A ceramic paper (Hitems) having a thickness of about 0.3 mm or so is laminated on both sides of the cut cooling film to manufacture a sample with a laminated structure having a total thickness of 2 mm or so. The sample has a structure in which the ceramic sheet, the cooling film, and the ceramic sheet are sequentially laminated. A temperature of a hot plate is set to 550°C, and waited for a certain period, whereby the temperature of the hot plate is stabilized at 550°C to have no gradient. A K-type thermocouple is fixed to one surface (the surface of the ceramic paper) of the manufactured sample, and then one surface (the surface of the opposite ceramic paper) of the sample to which the thermocouple is not fixed closely contacts the hot plate whose temperature has been stabilized, and an aluminum plate (thickness: 10 mm, width: 8 cm, length: 8 cm) is positioned on the upper part of the sample to which the thermocouple is fixed. Subsequently, while a pressure of about 12 kPa is applied to the sample with the aluminum plate, the state is maintained for 10 minutes. At the time point when it is maintained for the 10-minute, the temperature (10-minute maintaining temperature) (Tp1) confirmed on the thermocouple is measured, and the time (T1001) for which the temperature confirmed on the thermocouple becomes 100°C is also measured. As a reference sample, the same ceramic paper as used in the manufacture of the sample was used. The ceramic paper, which is the reference sample, is produced to have a thickness of about 2 mm or so, and horizontal and vertical lengths of about 40 mm. Using the reference sample, the 10-minute maintaining temperature (Tp2) and the time (T1002) for which the temperature confirmed on the thermocouple becomes 100°C are measured in the same manner. The temperature Tp1 becomes the temperature $T_I$ of Equation 1, and the temperature Tp2 becomes the temperature $T_L$ of Equation 1. In addition, the time T1001 becomes $T_{L2}$ of Equation 2, and the time T1002 becomes $T_{I2}$ of Equation 2.

### 2. Flame retardancy evaluation

Flame retardancy was identified according to the Vertical Burning Test of UL 94 standard. Flame retardancy was evaluated using a specimen in which cooling films produced in examples or comparative examples were each cut to be in the form of a bar with a thickness of about 1.4 mm or so, a horizontal length of about 13 mm or so, and a vertical length of about 125 mm or so. The flame retardancy evaluation was conducted by preparing three specimens for each identical cooling film and evaluating these specimens.

According to the UL 94 Vertical Burning Test standard, the combustion time (t1) of the specimen was measured while contacting one end of the bar-shaped specimen with a flame of 20 mm height for about 10 seconds, and the combustion pattern was recorded. Subsequently, while the specimen was contacted with the flame again for 10 seconds, and the combustion time (t2) and the spark glowing time (t3) of the specimen were measured, and the combustion pattern

was recorded.

For three specimens manufactured using the same cooling film, the t1, t2, and t3 were obtained respectively, and the averages of the three obtained values were used as the final t1, t2, and t3 values. In the UL 94 Vertical Burning Test standard, the flame retardancy rating is evaluated on the following criteria according to the times t1, t2, and t3, and in this specification, the flame retardancy rating is also evaluated according to the criteria in Table 1 below.

[Table 1]

| | V0 | V1 | V2 |
|---|---|---|---|
| Time t1 or t2 | 10sec or less | 30sec or less | 30sec or less |
| Sum of times t1 and t2 | 50sec or less | 250sec or less | 250sec or less |
| Sum of times t2 and t3 | 30sec or less | 60sec or less | 60sec or less |
| Combustion up to holding clamp (125mm mark) | No | No | No |
| Ignition of cotton wool by dropping | No | No | Yes |

As the evaluation results, when the flame retardancy rating was V0 or V1, the flame-retardant characteristics were evaluated as PASS, otherwise, they were evaluated as NG.

**3. DSC (Differential Scanning Calorimeter) analysis**

A sample is taken in an amount of about 4 mg or so and loaded into the DSC (Differential Scanning Calorimeter) equipment (Mettler Toledo, DSC3+ model). The temperature section of the equipment is set from 30°C to 350°C, and the endothermic section is confirmed while increasing the temperature at a temperature increasing rate of about 10°C/min or so. The endothermic peaks confirmed in the endothermic section are integrated to obtain the latent heat (unit: J/g). The temperature at the inflection point on the left onset point of the endothermic peak is set as the latent heat section start temperature (Tc) or the endothermic start temperature, and the temperature at the inflection point on the right onset point is set as the latent heat section end temperature (Tb) or the endothermic end temperature.

**4. GPC (Gel Permeation Chromatograph)**

Molecular weight properties of materials were measured using GPC (gel permeation chromatography). An analyte material is placed in a 5 mL vial, and diluted in toluene to a concentration of about 5 mg/mL or so. Thereafter, the standard sample for calibration and the material to be analyzed were filtered through a syringe filter (pore size: 0.45 μm), and then they were measured. As the analysis program, Agilent Technologies' ChemStation was used, and the weight average molecular weight (Mw) and number average molecular weight (Mn) were each obtained by comparing the elution time of the sample with the calibration curve. The measurement conditions of GPC are as follows.

<GPC measurement conditions>

Instrument: Agilent technologies' 1200 series
Column: using 2 PLgel mixed B from Polymer laboratories
Solvent: toluene
Column temperature: 40°C
Sample concentration: 5mg/mL, 10μL injection
Standard sample: polystyrene (Mp: 3900000, 723000, 316500, 52200, 31400, 7200, 3940, 485)

**5. Viscosity measurement**

A viscosity was evaluated at about 25°C using a viscosity measurement device (Brookfield viscometer, RV type). Using the viscosity measuring device and a spindle #63, the viscosity was measured while changing the rotation speed (shear rate) at the measurement temperature. A sample to be measured was loaded into the viscosity measuring device, and the viscosity was stabilized by maintaining the determined rotation speed for about 1 minute or so, and then the viscosity was measured.

### 6. Carbonized layer formation

It was evaluated whether the cooling film formed a carbonized layer by visually observing whether the carbonized layer was formed while the cooling film existing between the aerogel sheets after evaluating the temperature control performance turned black.

### Example 1.

A primary mixture was prepared by mixing strontium hydroxide octahydrate ($Sr(OH)_2 \cdot 8H_2O$, SHO) and starch (corn starch, Sigma Aldrich) in a weight ratio of 0.66:1.32 (SHO: starch). The gelatinization temperature of the starch was about 73°C or so. The primary mixture was mixed with a silicone resin (Dowsil EE-1100) to prepare a secondary mixture (composition). The weight ratio of the respective components in the secondary mixture was adjusted to 0.66:1.32:1 (SHO: starch: silicone resin). The silicone resin had a weight average molecular weight (MW) of about 15,000g/mol or so, and a viscosity of about 500 cP or so as measured under conditions of 25°C and 20 rpm. The strontium hydroxide octahydrate alone had a latent heat section start temperature of about 30°C or so, wherein the temperature (the maximum endothermic peak temperature) at the apex of the endothermic peak in the DSC analysis was about 88°C or so, and the latent heat was about 1,600 to 1,700J/g or so. The starch alone had an endothermic start temperature (a temperature at the inflection point on the left onset point of the endothermic peak in DSC analysis) of about 230°C or so, wherein the temperature (the maximum endothermic peak temperature) at the apex of the endothermic peak in DSC analysis was about 313°C. The latent heat of the starch was about 208 J/g or so. In addition, it was confirmed that the starch formed a carbonized layer (Char) at a temperature (Ta) of about 313°C or so.

The prepared composition (secondary mixture) was uniformly applied onto a PP (polypropylene) film to form a coating layer, and the surface of the coating layer was flattened using a 2 kg roller, and then maintained at a temperature of about 25°C for about 24 hours or so to manufacture a cooling film having a thickness of about 1.4 mm or so.

Figure 1 is a DSC analysis result for the composition.

As in the drawing, two endothermic peaks were identified in the DSC analysis result. When the endothermic peak identified at a lower temperature in the DSC analysis was designated as a first endothermic peak, and the endothermic peak identified at a higher temperature was designated as a second endothermic peak, the results for the respective peaks were as follows.

The latent heat section start temperature of the first endothermic peak was about 38°C or so, the latent heat section end temperature was about 175°C or so, and the latent heat was about 383.7 J/g or so. In addition, the latent heat section start temperature of the second endothermic peak was about 275°C or so, the latent heat section end temperature was about 325°C or so, and the latent heat was about 24.01 J/g or so.

### Example 2.

A composition and a cooling film were prepared in the same manner as in Example 1, except that the mixing ratio (weight ratio) of the strontium hydroxide octahydrate (SHO), the starch (Sigma Aldrich), and the silicone resin was 1:1:1 (SHO: starch: silicone resin).

Figure 2 shows a DSC analysis result for the composition.

As in the drawing, two endothermic peaks were identified in the DSC analysis result. When the endothermic peak identified at a lower temperature in the DSC analysis was designated as a first endothermic peak, and the endothermic peak identified at a higher temperature was designated as a second endothermic peak, the results for the respective peaks were as follows. The latent heat section start temperature of the first endothermic peak was about 37.5°C or so, the latent heat section end temperature was about 175°C or so, and the latent heat was about 558.6 J/g or so. In addition, the latent heat section start temperature of the second endothermic peak was about 300°C or so, the latent heat section end temperature was about 338°C or so, and the latent heat was about 13.4 J/g or so.

### Example 3.

A composition and a cooling film were prepared in the same manner as in Example 1, except that the mixing ratio (weight ratio) of the strontium hydroxide octahydrate (SHO), the starch (Sigma Aldrich), and the silicone resin was 1.32:0.66:1 (SHO: starch: silicone resin).

Figure 3 shows a DSC analysis result for the composition.

As in the drawing, two endothermic peaks were identified in the DSC analysis result. When the endothermic peak identified at a lower temperature in the DSC analysis was designated as a first endothermic peak, and the endothermic peak identified at a higher temperature was designated as a second endothermic peak, the results for the respective peaks were as follows. The latent heat section start temperature of the first endothermic peak was about 37°C or so, the latent

heat section end temperature was about 163°C or so, and the latent heat was about 758.6 J/g or so. In addition, the latent heat section start temperature of the second endothermic peak was about 300°C or so, the latent heat section end temperature was about 338°C or so, and the latent heat was about 23 J/g or so.

**Example 4.**

A composition and a cooling film were prepared in the same method as in Example 1, except that the mixing ratio (weight ratio) of the strontium hydroxide octahydrate (SHO), the starch (Sigma Aldrich), and the silicone resin was 1.6:0.4:1 (SHO: starch: silicone resin).

Figure 4 shows a DSC analysis result for the composition.

As in the drawing, two endothermic peaks were identified in the DSC analysis result. When the endothermic peak identified at a lower temperature in the DSC analysis was designated as a first endothermic peak, and the endothermic peak identified at a higher temperature was designated as a second endothermic peak, the results for the respective peaks were as follows. The latent heat section start temperature of the first endothermic peak was about 38°C or so, the latent heat section end temperature was about 140°C or so, and the latent heat was about 896.5 J/g or so. In addition, the latent heat section start temperature of the second endothermic peak was about 312.5°C or so, the latent heat section end temperature was about 337.5°C or so, and the latent heat was about 21.4 J/g or so.

**Example 5.**

A composition and a cooling film were prepared in the same method as in Example 1, except that the mixing ratio (weight ratio) of the strontium hydroxide octahydrate (SHO), the starch (Sigma Aldrich), and the silicone resin was 1.68:0.28:1 (SHO: starch: silicone resin).

Figure 5 shows a DSC analysis result for the composition.

As in the drawing, two endothermic peaks were identified in the DSC analysis result. When the endothermic peak identified at a lower temperature in the DSC analysis was designated as a first endothermic peak, and the endothermic peak identified at a higher temperature was designated as a second endothermic peak, the results for the respective peaks were as follows. The latent heat section start temperature of the first endothermic peak was about 37°C or so, the latent heat section end temperature was about 150°C or so, and the latent heat was about 979.5 J/g or so. In addition, the latent heat section start temperature of the second endothermic peak was about 312.5°C or so, the latent heat section end temperature was about 337.5°C or so, and the latent heat was about 16.2 J/g or so.

**Comparative Example 1.**

A composition and a cooling film were prepared in the same method as in Example 1, except that the strontium hydroxide octahydrate (SHO) was not added and the mixing ratio (weight ratio) of starch (starch, Sigma Aldrich) and silicone resin was 0.54:1 (starch: silicone resin). Only one endothermic peak was identified in the DSC analysis of the composition.

**Comparative Example 2.**

A composition and a cooling film were prepared in the same method as in Example 1, except that the starch was not added and the mixing ratio (weight ratio) of strontium hydroxide octahydrate (SHO) and silicone resin was 0.9:1 (SHO: silicone resin). In the case of the cooling film, severe leakage occurred during the phase transition process of strontium hydroxide octahydrate included in the cooling film, whereby the physical properties of the cooling film could not be measured.

The performances of the cooling films manufactured in Examples and Comparative Examples were summarized and described in Table 2 below. In Table 2 below, the temperature Tp1 is Tp1 identified in "1. Temperature control performance (conduction test)" test, which is the temperature $T_I$ of Equation 1 disclosed in this specification, and the temperature Tp2 is the temperature Tp2 identified in "1. Temperature control performance (conduction test)" test, which is the temperature $T_L$ of Equation 1.

In addition, the time T1001 in Table 2 below is T1001 identified in "1. Temperature control performance (conduction test)" test, which is $T_{L2}$ of Equation 2 disclosed in this specification, and the time T1002 is T1002 identified in "1. Temperature control performance (conduction test)" test, which is $T_{I2}$ of Equation 2 disclosed in this specification.

In Table 2 below, the carbonized layer indicates whether the carbonized layer was formed when confirmed by the method described in the "6. Carbonized layer formation."

In Table 2 below, the flame-retardant characteristics are the evaluation results of the "2. Flame retardancy evaluation."

[Table 2]

| | Tp1 (°C) | Tp2 (°C) | T1001 (sec) | T1002 (sec) | Carbonized layer | Flame-retardant characteristics |
|---|---|---|---|---|---|---|
| Example1 | 275 | 328 | 164 | 9 | O | NG |
| Example2 | 284 | 328 | 131 | 9 | O | PASS |
| Example3 | 300 | 328 | 110 | 9 | O | PASS |
| Example4 | 304 | 328 | 109 | 9 | O | PASS |
| Example5 | 317 | 328 | 102 | 9 | O | PASS |
| Comparative Example 1 | 363 | 328 | 90 | 9 | O | NG |

Through the results in Table 2, it can be confirmed that the film properties are affected by whether two endothermic peaks are shown in the DSC analysis, and the latent heat of each endothermic peak or the latent heat section start and end temperatures, and the like.

For example, there was an aspect that the results were improved as the ratio of the latent heat of the first endothermic peak to the latent heat of the second endothermic peak was lower, and it can be confirmed from the comparison of Example 2 and Example 4 that when the ratio is similar, the lower the total latent heat, the better the result.

## Claims

**1.** A composition comprising a resin component, an inorganic hydrate, and a carbonizable organic substance,

exhibiting first and second endothermic peaks in a DSC analysis, and
having a ratio J1/J2 of latent heat J1 of the first endothermic peak to latent heat J2 of the second endothermic peak in a range of 5 to 200.

**2.** The composition according to claim 1, wherein the inorganic hydrate is represented by Formula 1 below:

[Formula 1] $M_xA_y \cdot nH_2O$

wherein, M is a cation of a metal belonging to Groups 1 to 12 and Periods 2 to 6 of the periodic table, A is an anion, x and y are numbers satisfying $p \times x = q \times y$, where p is an oxidation number of the cation, q is an oxidation number of the anion, and n is a number more than or equal to 2.

**3.** The composition according to claim 1, wherein the carbonizable organic substance is a polysaccharide component.

**4.** The composition according to claim 1, wherein the carbonizable organic substance is starch.

**5.** The composition according to claim 1, wherein the inorganic hydrate is included in a ratio of 10 to 80 wt%.

**6.** The composition according to claim 1, wherein the carbonizable organic substance is included in an amount of 1 to 400 parts by weight relative to 100 parts by weight of the inorganic hydrate.

**7.** The composition according to claim 1, exhibiting the latent heat in a range of 200J/g to 1,500J/g.

**8.** The composition according to claim 1, wherein a latent heat section start temperature of the first endothermic peak is in a range of 10°C to 100°C, and a latent heat section end temperature is in a range of 100°C to 250°C.

**9.** The composition according to claim 1, wherein a value obtained by subtracting a latent heat section start temperature of the first endothermic peak from a latent heat section end temperature of the first endothermic peak is in a range of 50°C to 300°C.

**10.** The composition according to claim 1, wherein a latent heat section start temperature of the second endothermic peak is in a range of 200°C to 350°C, and a latent heat section end temperature is in a range of 250°C to 400°C.

**11.** The composition according to claim 1, wherein a value obtained by subtracting a latent heat section start temperature of the second endothermic peak from a latent heat section end temperature of the second endothermic peak is in a range of 5°C to 100°C.

**12.** The composition according to claim 1, wherein a value obtained by subtracting a latent heat section end temperature of the first endothermic peak from a latent heat section start temperature of the second endothermic peak is in a range of 50°C to 600°C.

**13.** The composition according to claim 1, wherein a ratio W1/W2 of a latent heat section width W1 of the first endothermic peak to a latent heat section width W2 of the second endothermic peak is in a range of 1.5 to 10.

**14.** A film comprising the composition according to any one of claims 1 to 13 or a cured product thereof.

**15.** The film according to claim 14, exhibiting a flame retardancy rating of V0 or V1 in a UL 94 V test (Vertical Burning Test).

**16.** The film according to claim 14, wherein an absolute value of $\Delta T1$ in Equation 1 below is in a range of 0.1°C to 100°C:

[Equation 1]

$$\Delta T1 = T_I - T_L$$

wherein, $T_L$ is a temperature, in a laminate in which insulating layers are laminated on both sides of the film, confirmed on the surface of the other insulating layer when heat at 550°C has been applied for 10 minutes to one of the insulating layers laminated on both sides of the film, and $T_I$ is a temperature confirmed on the opposite surface of the insulating layer when heat at 550°C has been applied for 10 minutes to one side of the insulating layer.

**17.** The film according to claim 14, wherein $\Delta T2$ in Equation 2 below is in a range of 2 seconds to 1,000 seconds:

[Equation 2]

$$\Delta T2 = T_{L2} - T_{I2}$$

wherein, $T_{L2}$ is a time (unit: seconds), in a laminate in which insulating layers are laminated on both sides of the film, respectively, from the time point when heat at 550°C begins to be applied for 10 minutes to one of the insulating layers laminated on both sides to the time point when the temperature confirmed on the surface of the other insulating layer becomes 100°C, and $T_{r2}$ is a time (unit: seconds) from the time point when heat at 550°C begins to be applied for 10 minutes to one side of the insulating layer to the time point when the temperature confirmed on the other surface of the insulating layer becomes 100°C.

**18.** A laminate comprising:

the film of claim 14; and
a functional layer formed on one side or both sides of the film, wherein
the functional layer is an insulating layer, a flame-retardant layer, or a heat-conducting layer.

**19.** A product comprising a heat-generating component and the film of claim 14 which exists adjacent to the heat-generating component.

**20.** A product comprising a heat-generating component and the laminate of claim 18 which exists adjacent to the heat-generating component.

[Figure 1]

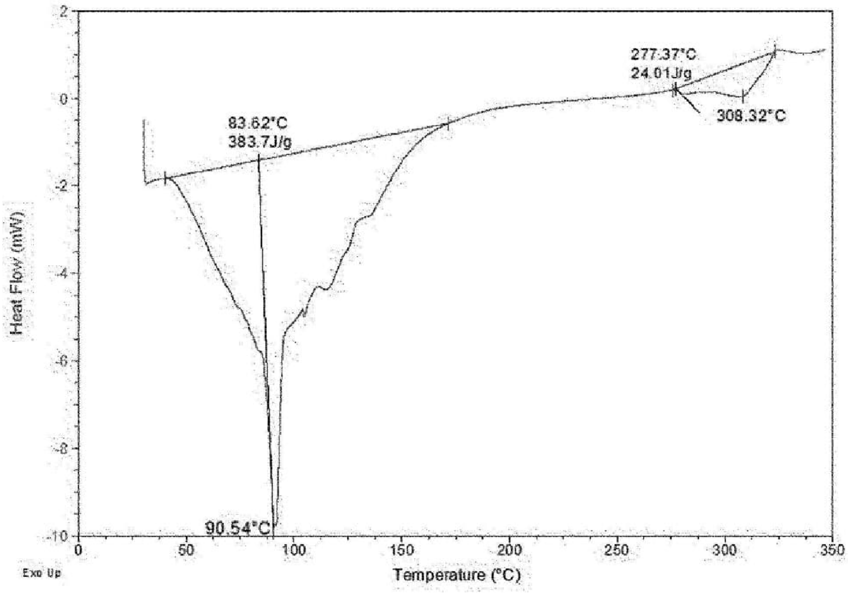


[Figure 2]

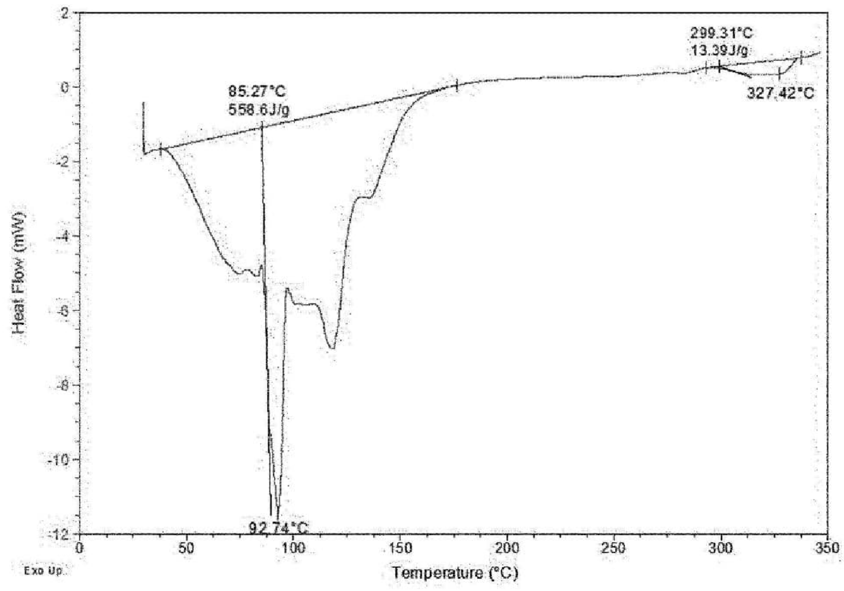

[Figure 3]

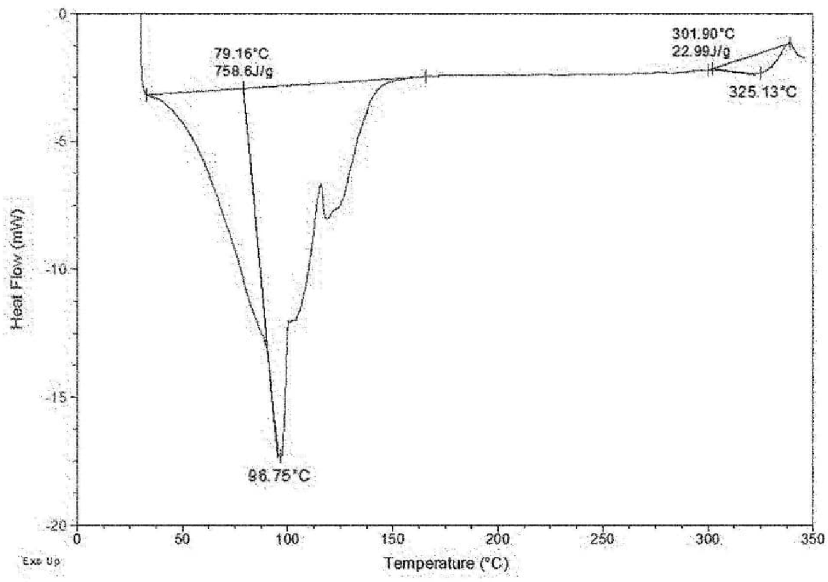


[Figure 4]

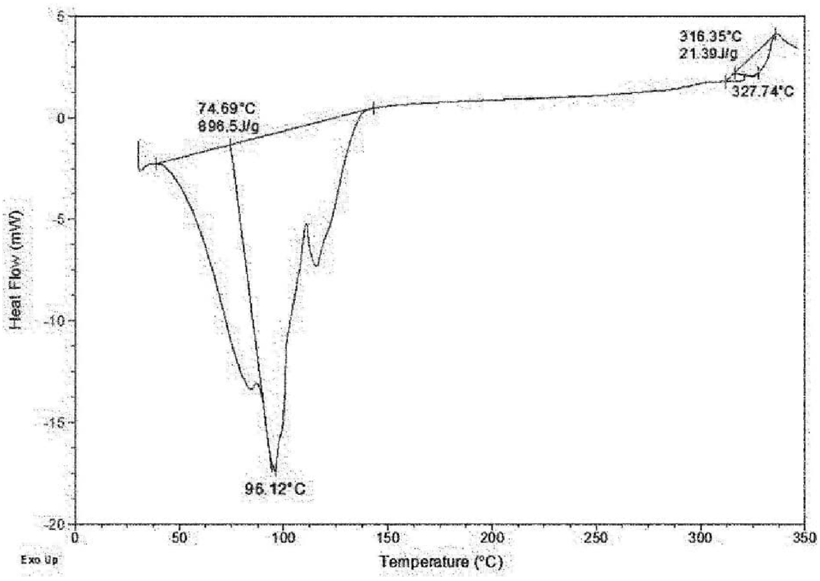

[Figure 5]

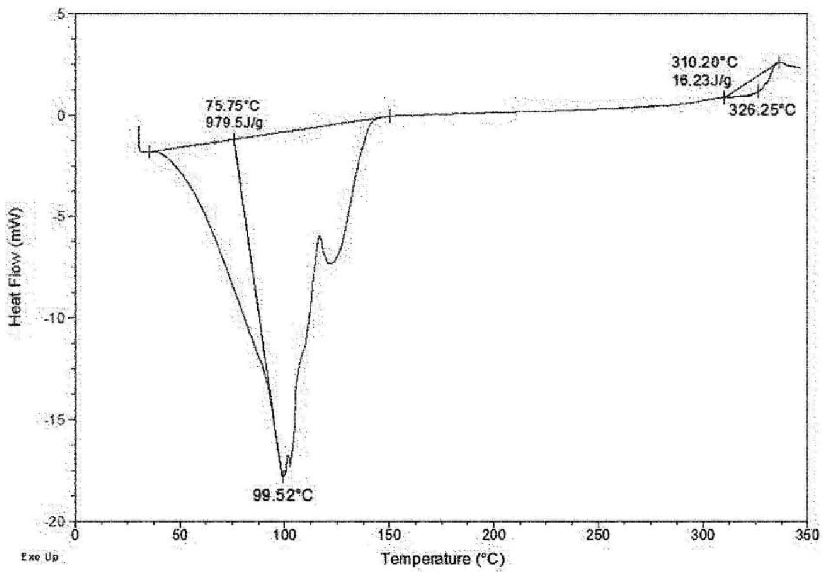
310.20°C
16.23J/g
326.25°C
75.75°C
979.5J/g
99.52°C
Heat Flow (mW)
Temperature (°C)
Exo Up
5
0
-5
-10
-15
-20
0
50
100
150
200
250
300
350

| INTERNATIONAL SEARCH REPORT | International application No. PCT/KR2024/096291 |
|---|---|

**A. CLASSIFICATION OF SUBJECT MATTER**

**C09K 5/08**(2006.01)i; **C09K 21/00**(2006.01)i; **C08K 3/22**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C09K 5/08(2006.01); C08G 77/12(2006.01); C08K 5/053(2006.01); C09K 5/06(2006.01); F24S 60/10(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무기 수화물(inorganic hydroxide), 탄화성 유기물(carbonized organic material), 전분(starch), 수산화 스트론튬 8 수화물(strontium hydroxide octahydrate), 잠열(latent heat)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0108238 A (LG CHEM, LTD.) 18 July 2023 (2023-07-18)<br>See claims 1-10; paragraphs [0026]-[0320]; and figures 1 and 2. | 1-20 |
| Y | LIU, Q. et al. Self-healed inorganic phase change materials for thermal energy harvesting and management. Applied Thermal Engineering. 2023 (published online on 13 October 2022), vol. 219, document no.: 119423, pp. 1-8.<br>See page 2, right column. | 1-20 |
| A | US 2021-0340423 A1 (UT-BATTELLE, LLC) 04 November 2021 (2021-11-04)<br>See claims 1-20. | 1-20 |
| A | CN 110387216 B (GUANGDONG UNIVERSITY OF TECHNOLOGY) 03 September 2021 (2021-09-03)<br>See claims 1-6. | 1-20 |
| A | KR 10-2020-0038395 A (OCI COMPANY LTD.) 13 April 2020 (2020-04-13)<br>See claims 1-11. | 1-20 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 January 2025** | **17 January 2025** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/096291**

| Patent document cited in search report | Publication date (day/month/year) | Patent family member(s) | Publication date (day/month/year) |
|---|---|---|---|
| KR 10-2023-0108238 A | 18 July 2023 | CN 118541425 A | 23 August 2024 |
| | | EP 4446376 A1 | 16 October 2024 |
| | | JP 2024-542794 A | 15 November 2024 |
| | | WO 2023-132737 A1 | 13 July 2023 |
| US 2021-0340423 A1 | 04 November 2021 | US 11560503 B2 | 24 January 2023 |
| CN 110387216 B | 03 September 2021 | CN 110387216 A | 29 October 2019 |
| KR 10-2020-0038395 A | 13 April 2020 | CN 112867775 A | 28 May 2021 |
| | | EP 3862409 A1 | 11 August 2021 |
| | | US 2021-0340424 A1 | 04 November 2021 |
| | | WO 2020-071737 A1 | 09 April 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230134190